# FASCICULE DE BREVET EUROPEEN

(11) **EP 1 758 767 B1**
(45) Date de publication et mention de la délivrance du brevet: **27.03.2013**
(21) Numéro de dépôt: 05762726.7
(22) Date de dépôt: 17.05.2005
(51) Int. Cl.: B60R 19/50, B60Q 1/04

(54) **BLOC PROJECTEUR POUR VÉHICULE AUTOMOBILE**
SCHEINWERFEREINHEIT FÜR EIN KRAFTFAHRZEUG
HEADLIGHT BLOCK FOR A MOTOR VEHICLE

(30) Priorité: 11.06.2004 FR 0406329
(43) Date de publication de la demande: 07.03.2007
(73) Titulaire: Renault s.a.s., 92100 Boulogne Billancourt (FR)
(72) Inventeur: KHAZAAL, Julien, F-78310 MAUREPAS (FR)
(86) Numéro de dépôt international: PCT/FR2005/050331
(87) Numéro de publication internationale: WO 2006/000722

(56) Documents cités:
- DE-A1- 19 946 995
- DE-B3- 10 237 454

## Description

L'invention concerne un bloc projecteur pourvu d'un soutien de bouclier pour véhicule automobile ainsi qu'un ensemble de soutiens d'un tel bouclier.

Le document DE-A-19946995 représente l'état de la technique auquel il est fait référence dans le préambule de la revendication 1.

De manière classique, les boucliers en polypropylène nécessitent des supports spécifiques pour répondre aux critères de qualité perçue, tels que les jeux entre le bouclier et les autres parties de la carrosserie du véhicule, et aux sollicitations des charges statiques et dynamiques.

Généralement, afin de maîtriser les jeux entre le projecteur et le bouclier, on réalise une liaison directe entre le projecteur et le bouclier. A cet effet, le bouclier est par exemple fixé sur un support situé sous le projecteur et solidaire de ce dernier. On désigne par bloc projecteur l'ensemble formé du projecteur et du support de bouclier. Toutefois, les contraintes dues au poids du bouclier ainsi que les charges statiques et dynamiques importantes exercées sur le bouclier, sont alors transmises au support sous projecteur lequel n'est pas conçu pour supporter de telles contraintes. Il en résulte une fragilisation du bloc projecteur, notamment au niveau de la fixation entre le projecteur et le support, ou une détérioration du projecteur.

L'invention vise à pallier ces inconvénients en proposant un bloc projecteur pour véhicule automobile, comportant un projecteur dont la paroi inférieure est solidaire d'un support de bouclier du véhicule, le bloc projecteur comportant sur sa partie arrière d'extrémité au moins une première fixation à la structure du véhicule, caractérisé en ce que la partie avant du support située en regard de la paroi inférieure du projecteur est apte à supporter le bouclier du véhicule de manière à le maintenir à une distance prédéterminée sous cette paroi inférieure, et en ce que, à distance de la première fixation, sur leur partie avant, la paroi inférieure du projecteur et le support comportent au moins une fixation directe commune sur la structure du véhicule.

Une telle fixation directe commune permet de transmettre une partie des efforts exercés sur le bouclier ou le bloc projecteur directement à la structure du véhicule.

Avantageusement, le support comprend sur sa partie avant à distance de cette fixation commune et de la première fixation, au moins un pied d'appui apte à reposer sur un élément de la structure du véhicule. Ce pied d'appui est situé à un endroit où le support ou le projecteur, ne sont pas directement reliés à structure du véhicule, de sorte que lors d'un fléchissement notable du support, sous l'effet d'une charge importante, le pied d'appui va venir s'appuyer sur la structure du véhicule et lui transmettre les efforts. La conception d'un ou plusieurs pieds d'appui permet de réduire l'épaisseur du support sans nuire à la robustesse du bloc projecteur.

Avantageusement, le projecteur et le support sont reliés par des pattes de fixation verticales. Une liaison robuste est ainsi obtenue entre les deux pièces.

De préférence, les pattes de fixation verticales du support sont situées à proximité de la partie avant du support destinée à supporter le bouclier, de manière à limiter tout effet de levier entre ces pattes et la partie supportant le bouclier, et à améliorer la robustesse de l'ensemble.

Avantageusement, le support présente des orifices de fixation d'axe vertical aptes à assurer son positionnement par rapport au projecteur.

De préférence, la partie avant du support, destinée à supporter le bouclier, est formée d'une pluralité de surfaces de support s'étendant sensiblement horizontalement le long du bord inférieur du projecteur. Le bouclier peut ainsi être soutenu régulièrement le long du projecteur.

Avantageusement, le support est réalisé dans une matière à haute limite d'élasticité de manière à subir des contraintes relativement élevées sans se déformer ou se rompre.

L'invention concerne également un ensemble de soutiens pour bouclier de véhicule automobile comportant deux blocs projecteurs selon l'invention disposés de part et d'autre du véhicule de telle sorte que les supports soient situés sensiblement au dessus d'une partie de la structure du véhicule, et au moins une patte de soutien disposée entre les deux blocs projecteurs apte à être fixée sur la structure du véhicule. Le bouclier dispose ainsi de soutiens répartis sur sa longueur.

Avantageusement, trois pattes de soutien sont prévues entre les blocs projecteur afin de réduire la longueur des parties de bouclier sans points de soutien.

Avantageusement, les blocs projecteurs et les pattes de soutien sont fixés sur la traverse chocs du véhicule.

L'invention est maintenant décrite en référence aux dessins annexés, non limitatifs, dans lesquels :
- la figure 1 est une représentation en perspective de la structure avant d'un véhicule automobile comportant un ensemble de soutiens de bouclier selon l'invention ;
- la figure 2 représente une vue en perspective de dessus d'un bloc projecteur selon l'invention ;
- les figures 3 et 4 représentent des vues en perspective de côté et arrière du bloc projecteur de la figure 2 ;
- la figure 5 est une vue en coupe longitudinale représentant le bord d'un bouclier soutenu sous le projecteur par le support de projecteur ;
- la figure 6 est une vue en coupe longitudinale du bouclier supporté par une patte de soutien disposée entre les blocs projecteurs.

Dans la description, les termes avant et arrière se réfèrent à l'avant et l'arrière du véhicule suivant la direction longitudinale X de ce dernier, dirigée vers l'arrière du véhicule. Les pièces sont décrites dans une position identique à leur position de montage sur le véhicule.

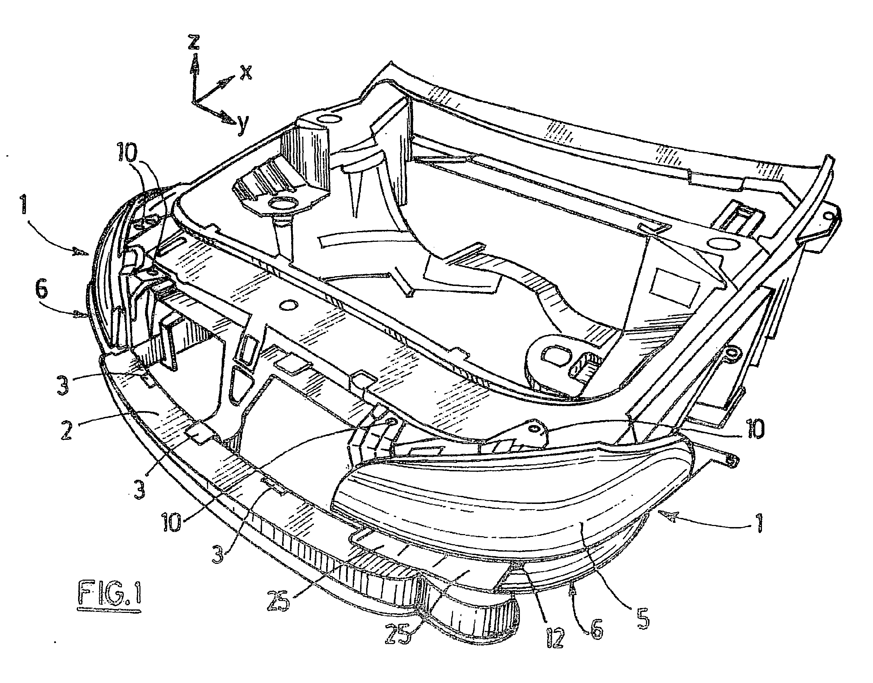

La figure 1 représente la structure avant d'un véhicule comportant deux blocs projecteurs avant 1 montés sur les bords latéraux du véhicule au dessus de la traverse chocs 2. La traverse chocs 2 supporte des pattes de soutien 3 pour le bouclier du véhicule situées entre les deux blocs projecteurs. Chaque bloc projecteur est formé d'un projecteur comprenant un boîtier 4 fermé par une glace externe 5, et d'un support de bouclier 6.

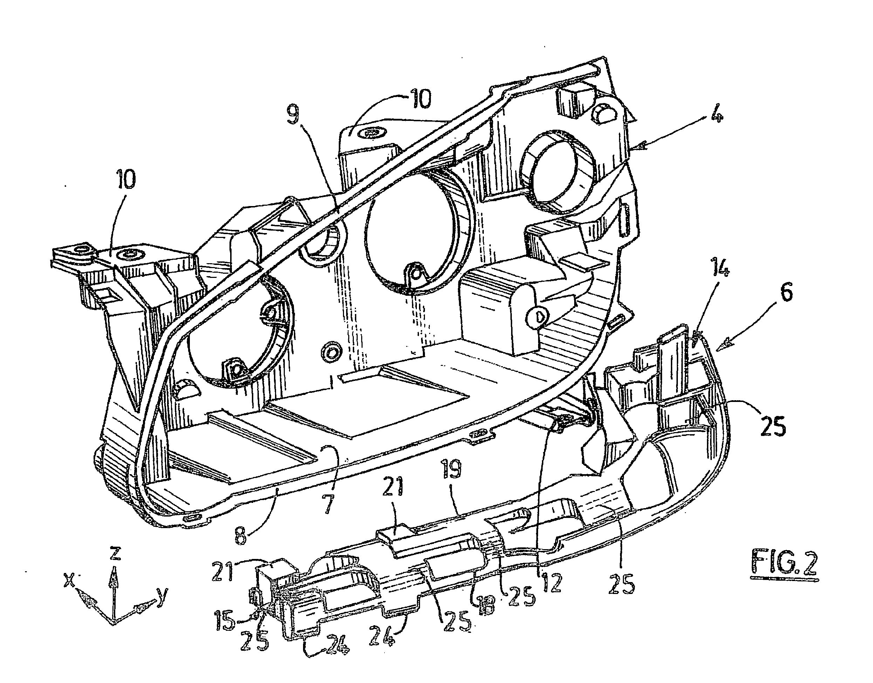

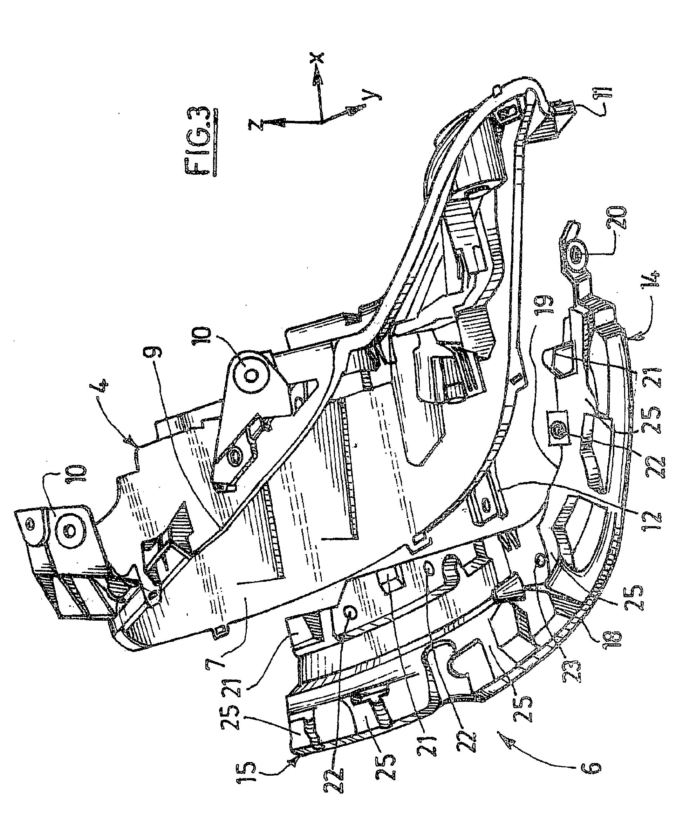

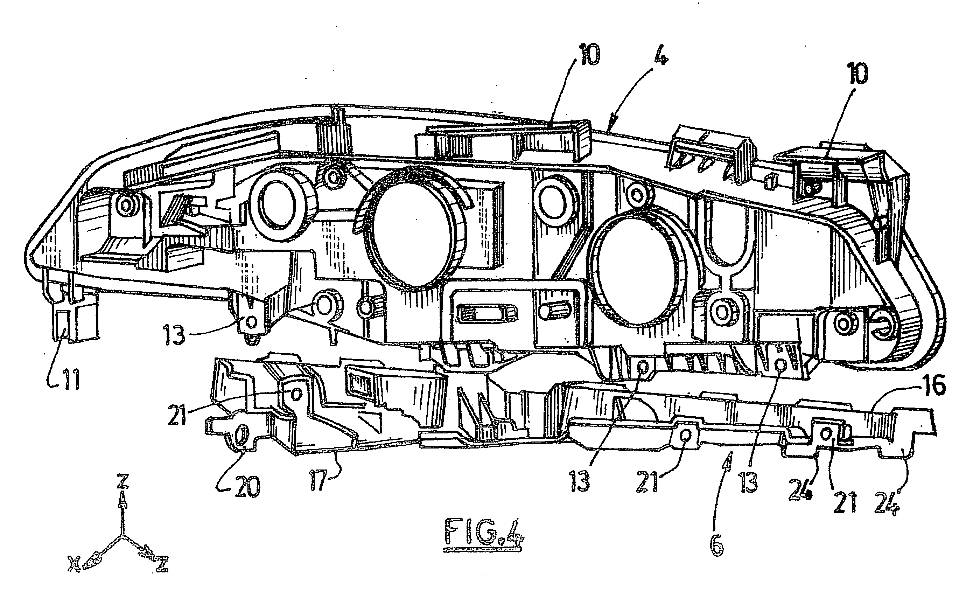

Le boîtier 4 et le support 6 sont décrits en référence aux figures 2 à 4. Pour plus de clarté la glace a été omise sur ces figures.

Le boîtier 4 présente une paroi inférieure 7 qui s'étend sensiblement horizontalement et située en regard du support 6. Le bord libre de cette paroi, appelé bord inférieur 8 se prolonge sur tout le pourtour du boîtier pour la fixation de la glace. La partie supérieure du bord du boîtier est désignée par la référence 9. Le boîtier présente, vu de dessus, une forme générale coudée dont une partie s'étend vers l'arrière du véhicule sensiblement dans la direction longitudinale X et l'autre partie s'étend vers l'avant dans une direction proche de la direction transversale Y du véhicule.

Sur son bord supérieur 9, le boîtier présente deux pattes de fixation 10 qui s'étendent dans un plan sensiblement horizontal. Ces pattes 10 sont situées respectivement sensiblement au milieu du bord supérieur 9 et du côté de l'extrémité avant du bord supérieur 9 du boîtier. La figure 1 montre que ces pattes 10 sont fixées sur une partie transversale de la structure du véhicule par des fixations (vis ou analogues) d'axe sensiblement vertical.

Au niveau de son extrémité arrière, le boîtier 4 comporte une autre patte de fixation 11 destinée également à être fixée sur la structure du véhicule. Cette patte fait saillie de la paroi inférieure 7 sensiblement verticalement vers le bas.

Sur sa paroi inférieure 7, le boîtier présente une patte de fixation 12 qui s'étend sensiblement horizontalement vers l'avant du véhicule en saillant du bord inférieur 8. Cette patte 12 est située sensiblement au milieu du bord inférieur, à distance de la patte de fixation 11 arrière.

Le boîtier 4 présente en outre sur sa paroi inférieure 7, à distance du bord inférieur 8, une pluralité de pattes 13 qui s'étendent verticalement et destinées à être solidarisées au support 6. Ces pattes s'étendent de préférence parallèlement les unes aux autres afin de faciliter la fixation du support 6 sur le boîtier.

Le support 6 se présente sous la forme d'une plaque moulée, de préférence dans une matière à haute limite d'élasticité, qui s'étend sensiblement horizontalement, et qui est destinée à venir contre la paroi inférieure 7 du projecteur, sous cette dernière. Elle présente une forme générale coudée vue de dessus, similaire à la forme du boîtier, dont une extrémité 14 est dirigée vers l'arrière du véhicule sensiblement dans la direction longitudinale X et l'autre extrémité 15 s'étend sensiblement suivant la direction transversale Y, en avant. On désigne par 16 et 17, les faces supérieure et inférieure respectivement du support, et par 18 et 19, les bords avant et arrière respectivement du support.

Le support comporte sur son extrémité arrière 14 une patte de fixation 20 verticale, s'étendant sensiblement suivant la direction longitudinale X, destinée à être fixée sur la structure du véhicule.

Sur sa face supérieure 16, saillant de celle-ci, le support présente une pluralité de pattes verticales 21 parallèles les unes aux autres et destinées à coopérer avec les pattes verticales 13 du boîtier. A cet effet, elles sont réparties le long du bord arrière 19 du support.

A proximité de son bord arrière 19, le support présente plusieurs orifices 22 de positionnement d'axe vertical, destinés à coopérer avec des pattes correspondantes solidaires de, ou avec des orifices correspondants (non représentés) prévus dans la paroi inférieure 7 du boîtier. Les parties du support présentant ces orifices sont de préférence conformées de manière à venir en appui contre la paroi inférieure 7 du boîtier, ou contre des pattes solidaires de ce dernier. Le support peut ainsi être aisément positionné de manière correcte par rapport au boîtier et peut être conçu pour faire partie intégrante de l'isostatisme du bloc projecteur.

Le support 6 présente en outre un orifice d'axe vertical 23 disposé de manière à pouvoir coopérer avec la patte de fixation 12 du boîtier. Cette patte 12 et cet orifice 23 permettent une fixation commune directe du boîtier et du support sur la structure du véhicule.

Sur sa face inférieure 17, le support est pourvu de deux pieds d'appui 24 d'axe vertical, destinés à venir prendre appui sur la traverse chocs 2 de la structure du véhicule. Ces pieds d'appui 24 sont situés à proximité du bord avant 18, du côté de son extrémité avant 15, distante de la patte de fixation 20.

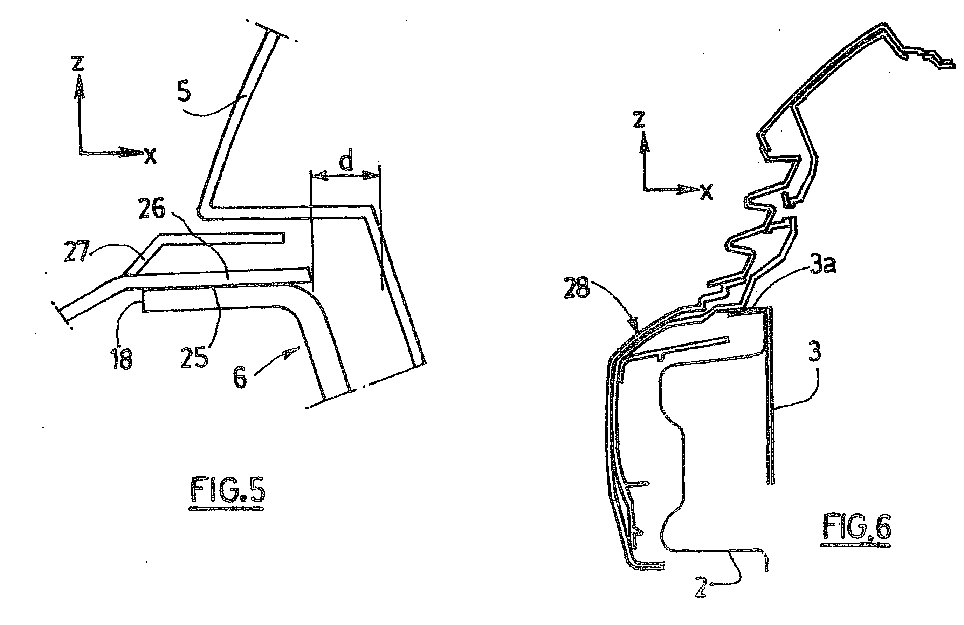

Enfin, sur sa face supérieure 16, le long de son bord avant 18, le support est pourvu d'une pluralité de surfaces de support de bouclier 25 qui s'étendent sensiblement horizontalement. Les orifices 22 sont de préférence situés le plus près possible de ces surfaces afin de limiter l'effet levier entre les surfaces 25 et les fixations traversant ces orifices 22. Le support 6 est fixé sur la paroi inférieure 7 du boîtier de sorte que son bord avant 18 soit disposé légèrement en avant du bord inférieur 8 du boîtier, sous une partie horizontale de la glace 5 (figure 5). Ces surfaces 25 sont moulées de manière à être situées à une distance sensiblement constante de la glace lorsqu'elle est fixée au projecteur. Elles sont de préférence réparties de manière discontinue de sorte que l'épaisseur du support entre les surfaces de soutien peut être réduite. Cette épaisseur moindre entre les surfaces permet notamment le passage de clips qui servent à fixer une garniture sur le bord supérieur du bouclier.

L'ensemble des points de fixation entre le support et le boîtier sont de préférence répartis le long du support pour équilibrer les transferts de charge. En outre les pieds d'appui 24 pourraient être remplacés, lorsque l'encombrement le permet, par une fixation directe commune du boîtier et du support sur la structure du véhicule pour assurer le transfert de charge du boîtier, ou du support, vers la structure.

La figure 5 représente le bord supérieur 26 du bouclier qui repose sur une surface 25 du support de projecteur sous la glace 5. Une garniture de bouclier 27, fixée sur le bord supérieur 26 par des clips, comble en partie l'espace entre le bouclier et la glace. Le bouclier est ainsi soutenu sous le projecteur sensiblement sur toute la longueur de ce dernier de sorte que le jeu entre le projecteur et le bouclier est maîtrisé. Tel que représenté figure 5, les surfaces 25 sont de préférence situées à une distance d de la glace 5 suivant la direction longitudinale X, de manière à minimiser les efforts transmis à la glace lors d'un choc frontal.

Le bouclier est également soutenu entre les deux blocs projecteurs par un ensemble de trois pattes de soutien 3 fixées sur la traverse chocs 2. La partie verticale de chaque patte est fixée sur la traverse, tandis que leur extrémité 3a supérieure s'étend dans un plan sensiblement horizontal et sert de support au bouclier. Ces pattes sont réparties entre les blocs projecteurs de manière à offrir des points de soutien régulièrement espacés au bouclier. De préférence, ces trois pattes font partie d'une même pièce. La figure 6 représente le bouclier 28 dont une partie de la face interne est en appui sur l'une des pattes de soutien 3. Ces pattes 3 sont de préférence en métal.

L'ensemble formé des blocs projecteurs et des pattes de soutien assure ainsi des points de support pour le bouclier qui sont répartis de préférence régulièrement sensiblement tout le long du bouclier, les extrémités du bouclier étant fixées directement sur la structure du véhicule.

## Revendications

1. Bloc projecteur (1) pour véhicule automobile, comportant un projecteur dont la paroi inférieure (7) est solidaire d'un support (6) de bouclier du véhicule, le bloc projecteur comportant sur sa partie arrière d'extrémité au moins une première fixation (11) à la structure du véhicule, **caractérisé en ce que**, la partie avant du support située en regard de la paroi inférieure (7) du projecteur est apte à supporter le bouclier du véhicule de manière à le maintenir à une distance prédéterminée sous cette paroi inférieure (7), et **en ce que**, à distance de la première fixation (11), sur leur partie avant, la paroi inférieure (7) du projecteur et le support du projecteur (6) comportent au moins une fixation directe commune (12, 23) sur la structure du véhicule.

2. Bloc projecteur selon la revendication 1, **caractérisé en ce que** le support comprend sur sa partie avant à distance de cette fixation commune et de la première fixation, au moins un pied de support (24) apte à reposer sur un élément (2) de la structure du véhicule.

3. Bloc projecteur selon la revendication 1 ou 2, **caractérisé en ce que** le projecteur et le support sont reliés par des pattes de fixation verticales (13, 21).

4. Bloc projecteur selon la revendication 3, **caractérisé en ce que** les pattes de fixation verticales (21) du support sont situées à proximité de la partie avant du support destinée à supporter le bouclier.

5. Bloc projecteur selon l'une des revendications 1 à 4, **caractérisé en ce que** le support présente des orifices de fixation d'axe vertical (22) aptes à assurer son positionnement par rapport au projecteur.

6. Bloc projecteur selon l'une des revendications 1 à 5, **caractérisé en ce que** la partie avant du support, destinée à supporter le bouclier, est formée d'une pluralité de surfaces de support (25) s'étendant sensiblement horizontalement le long du bord inférieur (8) du projecteur

7. Bloc projecteur selon l'une des revendications 1 à 6, **caractérisé en ce que** le support est réalisé dans une matière à haute limite d'élasticité.

8. Ensemble de soutiens pour bouclier de véhicule automobile comportant deux blocs projecteurs (1) selon l'une des revendications 1 à 7, **caractérisé en ce que** les blocs projecteurs (1) sont disposés de part et d'autre du véhicule de telle sorte que les supports (6) soient situés sensiblement au dessus d'une partie (2) de la structure du véhicule, et **en ce qu'**il comprend au moins une patte de soutien (3) disposée entre les deux blocs projecteurs apte à être fixée sur la structure du véhicule.

9. Ensemble selon la revendication 8, **caractérisé en ce qu'**il comprend trois pattes de soutien (3) entre les blocs projecteurs.

10. Ensemble selon la revendication 8 ou 9, **caractérisé en ce que** les blocs projecteurs et les pattes de soutien sont fixés sur la traverse chocs (2) du véhicule.

## Claims

1. Headlamp unit (1) for a motor vehicle, comprising a headlamp, the lower wall (7) of which is secured to a vehicle bumper support (6), the headlamp unit comprising, on its rear end part, at least one first fixing (11) to the structure of the vehicle, **characterized in that** the front part of the support situated facing the lower wall (7) of the headlamp is able to support the vehicle bumper so as to hold it a predetermined distance below this lower wall (7), and **in that**, distant from the first fixing (11), on their front part, the lower wall (7) of the headlamp and the headlamp support (6) comprise at least one common direct fixing (12, 23) to the structure of the vehicle.

2. Headlamp unit according to Claim 1, **characterized in that** the support comprises on its front part distant from this common fixing and from the first fixing, at least one support leg (24) able to rest on an element (2) of the structure of the vehicle.

3. Headlamp unit according to Claim 1 or 2, **characterized in that** the headlamp and the support are connected by vertical fixing lugs (13, 21).

4. Headlamp unit according to Claim 3, **characterized in that** the vertical fixing lugs (21) of the support are situated near the front part of the support which part is intended to support the bumper.

5. Headlamp unit according to one of Claims 1 to 4, **characterized in that** the support has fixing orifices of vertical axis (22) able to position it in relation to the headlamp.

6. Headlamp unit according to one of Claims 1 to 5, **characterized in that** the front part of the support, which part is intended to support the bumper, is formed of a plurality of support surfaces (25) running substantially horizontally along the lower edge (8) of the headlamp.

7. Headlamp unit according to one of Claims 1 to 6, **characterized in that** the support is made of a material with a high elastic limit.

8. Set of supports for motor vehicle bumper comprising two headlamp units (1) according to one of Claims 1 to 7, **characterized in that** the headlamp units (1) are arranged one on either side of the vehicle in such a way that the supports (6) are situated substantially above a part (2) of the structure of the vehicle and **in that** it comprises at least one support lug (3) located between the two headlamp units and able to be fixed to the structure of the vehicle.

9. Set according to Claim 8, **characterized in that** it comprises three support lugs (3) between the headlamp units.

10. Set according to Claim 8 or 9, **characterized in that** the headlamp units and the support lugs are fixed to the bumper impact beam (2) of the vehicle.

## Patentansprüche

1. Scheinwerferblock (1) für ein Kraftfahrzeug, der einen Scheinwerfer aufweist, dessen untere Wand (7) fest mit einem Stoßfängerträger (6) des Fahrzeugs verbunden ist, wobei der Scheinwerferblock in seinem hinteren Endbereich mindestens eine erste Befestigung (11) am Aufbau des Fahrzeugs aufweist, **dadurch gekennzeichnet, dass** der vordere Bereich des Trägers, der sich gegenüber der unteren Wand (7) des Scheinwerfers befindet, den Stoßfänger des Fahrzeugs so tragen kann, dass er ihn in einem vorbestimmten Abstand unter dieser unteren Wand (7) hält, und dass in Abstand zur ersten Befestigung (11) die untere Wand (7) des Scheinwerfers und der Träger des Scheinwerfers (6) in ihrem vorderen Bereich mindestens eine gemeinsame direkte Befestigung (12, 23) am Aufbau des Fahrzeugs aufweisen.

2. Scheinwerferblock nach Anspruch 1, **dadurch gekennzeichnet, dass** der Träger in seinem vorderen Bereich in Abstand zu dieser gemeinsamen Befestigung und zur ersten Befestigung mindestens einen Stützfuß (24) enthält, der auf einem Element (2) des Aufbaus des Fahrzeugs ruhen kann.

3. Scheinwerferblock nach Anspruch 1 oder 2, **dadurch gekennzeichnet, dass** der Scheinwerfer und der Träger durch senkrechte Befestigungslaschen (13, 21) verbunden sind.

4. Scheinwerferblock nach Anspruch 3, **dadurch gekennzeichnet, dass** die senkrechten Befestigungslaschen (21) des Trägers sich in der Nähe des vorderen Bereichs des Trägers befinden, der dazu bestimmt ist, den Stoßfänger zu tragen.

5. Scheinwerferblock nach einem der Ansprüche 1 bis 4, **dadurch gekennzeichnet, dass** der Träger Befestigungslöcher mit senkrechter Achse (22) aufweist, die seine Positionierung bezüglich des Scheinwerfers gewährleisten können.

6. Scheinwerferblock nach einem der Ansprüche 1 bis 5, **dadurch gekennzeichnet, dass** der vordere Bereich des Trägers, der dazu bestimmt ist, den Stoßfänger zu tragen, aus einer Vielzahl von Tragflächen (25) geformt ist, die sich im Wesentlichen waagrecht entlang des unteren Rands (8) des Scheinwerfers erstrecken.

7. Scheinwerferblock nach einem der Ansprüche 1 bis 6, **dadurch gekennzeichnet, dass** der Träger aus einem Material mit hoher Elastizitätsgrenze hergestellt ist.

8. Einheit von Stützen für einen Stoßfänger eines Kraftfahrzeugs, der zwei Scheinwerferblöcke (1) nach einem der Ansprüche 1 bis 7 aufweist, **dadurch gekennzeichnet, dass** die Scheinwerferblöcke (1) zu beiden Seiten des Fahrzeugs derart angeordnet sind, dass die Träger (6) sich im Wesentlichen über einem Bereich (2) des Aufbaus des Fahrzeugs befinden, und dass sie mindestens eine zwischen den zwei Scheinwerferblöcken angeordnete Stützlasche (3) aufweist, die an dem Aufbau des Fahrzeugs befestigt werden kann.

9. Einheit nach Anspruch 8, **dadurch gekennzeichnet, dass** sie drei Stützlaschen (3) zwischen den Scheinwerferblöcken aufweist.

10. Einheit nach Anspruch 8 oder 9, **dadurch gekennzeichnet, dass** die Scheinwerferblöcke und die Stützlaschen am Stoßquerträger (2) des Fahrzeugs befestigt sind.
